# EUROPEAN PATENT SPECIFICATION

(11) **EP 2 105 632 B1**
(45) Date of publication and mention of the grant of the patent: **01.02.2012**
(21) Application number: 09156296.7
(22) Date of filing: 26.03.2009
(51) Int. Cl.: F16F 15/26

(54) **Engine balancer**
Motorausgleichwelle
Équilibreur de moteur

(30) Priority: 26.03.2008 JP 2008081402
(43) Date of publication of application: 30.09.2009
(73) Proprietor: KABUSHIKI KAISHA TOYOTA JIDOSHOKKI, Kariya-shi Aichi 448-8671 (JP); Toyota Jidosha Kabushiki Kaisha, Toyota-shi, Aichi-ken, 471-8571 (JP)
(72) Inventor: Inoue, Koji c/o KABUSHIKI KAISHA TOYOTA JIDOSHOKKI, Kariya-shi, Aichi 448-8671 (JP)
(74) Representative: TBK

(56) References cited:
- EP-A- 1 081 410
- DE-A1- 19 947 271
- JP-A- 9 014 353

## Description

The present invention relates to the combination of an engine balancer and an oil pan or frame having the features of the preamble of claim 1, which suppresses vibration in an engine.

JP-No. 2-33948 describes an example of an engine balancer. The engine balancer described therein includes balance shafts used to reduce vibration, which are caused by inertial force, in reciprocating parts, such as pistons and connecting rods. The balance shafts are housed in a balance housing, which is attached to the lower surface of a cylinder block. The cylinder block defines a crank chamber, which accommodates a crankshaft. An oil pan, which contains oil, is arranged under the cylinder block. The balance housing is accommodated in the oil pan. The balance housing functions to prevent interference between the balance shafts and the oil in the oil pan. The balance housing includes cylindrical bearings to rotatably support the balance shaft. The balance shafts each have an end projecting from an end surface of the balance housing. A gear is attached to the projected portion of each balance shaft to receive torque from the crankshaft. An eccentric weight is arranged on each balance shaft. A weight compartment defined in the balance housing accommodates the weight. Inner wall surfaces defining the weight compartment are tapered and formed so that the left and right sides of the weight compartment are symmetric relative to the middle of the weight compartment in the axial direction of the balance shafts. Further, the weight compartment has a diameter that increases as the middle of the weight compartment becomes closer. The portion at which the left and right inner wall surfaces connect defines a maximum diameter portion. The maximum diameter portion is formed with a discharge passage, which is communicated with the crank chamber to discharge oil thereto

. The discharge passage is formed at a location that is higher than the surface level of the oil in the oil pan. When the engine starts running, the torque of the crankshaft rotates the balance shafts at a rotation speed that is two times greater than the rotation speed of the crankshaft. Thus, the balance shaft acts to cancel secondary inertial force of the engine and reduces vibration of the engine. In this case, oil lubricates the bearings of the balance housing and then leak into the weight compartment. In the weight compartment, rotation of the weights forces the oil toward and onto the inner wall surface. Thus, oil collects on the inner wall surface. Since the weight compartment is formed so that the inner wall surfaces are tapered and the left and right sides of the weight compartment are symmetric in the axial direction of the balance shafts, the oil on the inner wall surface moves along the inner wall surface and collects in the maximum diameter portion. The oil collected in the maximum diameter portion is guided to the discharge passage by the stream of air produced by when the weights rotate. Then, the oil is discharged out of the discharge passage and into the crank chamber.

However, in the balancer described above , the discharge passage extends toward the wall surface of the oil pan. Thus, the oil discharged out of the discharge passage directly strikes the wall surface of the oil pan head-on. This scatters the oil, which may directly fall into the oil contained in the oil pan, and increases the change in the surface level of the oil in the oil pan. In an engine in which the oil surface level changes greatly, it is difficult to set the timing at which an oil level sensor goes on. Further, more bubbles are produced in the oil, and an oil strainer tends to drawn in oil containing bubbles.

A further example of an engine balancer is described in DE 199 47 271 A1, which includes a balance housing attached to a lower portion of a cylinder block of an engine, and two balance shafts housed in the balance housing, wherein the balance shafts receive torque from a crankshaft of the engine. Here, the balance housing includes, for each balance shaft, a discharge passage for discharging oil out of the balance housing, which discharge passages are arranged parallel to the radial direction of the balance shafts, respectively.

It is the object of the present invention to provide a combination of an engine balancer and an oil pan or frame which reduces changes in the surface level of the oil contained in an oil pan even when the oil in a balance housing is discharged out of a discharge passage.

This object is achieved by a combination having the features of claim 1.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a partial front view showing an engine including a first embodiment of a balancer oil-pan-combination according to the present invention;
Fig. 2A is partial cross-sectional side view of the balancer shown in Fig. 1;
Fig. 3 is a schematic diagram illustrating the flow of oil from a weight compartment and out of a balance housing;
Fig. 4 is a schematic diagram illustrating the flow of oil from gear compartments and out of the balance housing;
Fig. 5 is a partial front view showing an engine not including an embodiment of a combination according to the present invention;
Figs. 6A to 6C show discharge passages in further embodiments of the present invention; and
Fig. 7 is a partial front view showing an engine of still further embodiment of the present invention.

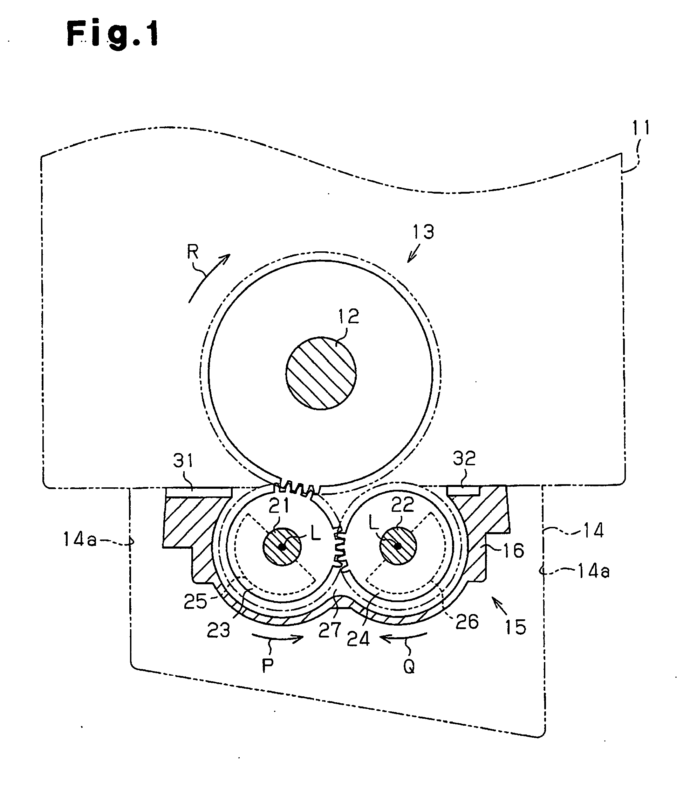

A first embodiment of an engine balancer according to the present invention will now be discussed with reference to Figs. 1 to 4.

Referring to Fig. 1, an engine includes a cylinder block 11. A crankshaft 12 is rotatably supported by a lower portion of the cylinder block 11. Connecting rods (not shown) connect pistons (not shown) to the crankshaft 12. When the engine is running, the connecting rods convert reciprocation of the pistons to rotation of the crankshaft 12. A drive gear 13, which is fixed to the crankshaft 12, rotates integrally with the crankshaft 12 in the direction of arrow R.

An oil pan 14, which contains oil, is arranged under the cylinder block 11. A balancer 15, which cancels the inertial force that acts in the moving direction of each piston when the engine is running, is fixed to the lower end of the cylinder block 11 in a state accommodated in the oil pan 14.

A balance housing 16, which serves as a housing for the balancer 15, is arranged facing toward wall surfaces of the oil pan 14. The balance housing 16 houses a first balance shaft 21 and a second balance shaft 22, which are parallel to each other. Further, the balance housing 16 rotatably supports the first balance shaft 21 and second balance shaft 22. The balance housing 16 is formed from an aluminum alloy, cast iron, or the like and fastened to the lower end of the cylinder block 11 by a plurality of bolts.

A first gear 23 and a second gear 24 are respectively fixed to the first balance shaft 21 and the second balance shaft 22. The first gear 23 and second gear 24, which have the same number of teeth, are mated with each other. Thus, the first balance shaft 21 and the second balance shaft 22 are rotated in opposite directions at the same speed. The first gear 23 is rotated in the direction of arrow P, and the second gear 24 is rotated in the direction of arrow Q. The first gear 23, which has two times more teeth than the drive gear 13, is mated with the first gear 23. Thus, the first balance shaft 21 and second balance shaft 22 rotate at a speed that is two times greater than that of the crankshaft 12.

The first balance shaft 21 includes a first balance weight 25, and the second balance shaft 22 includes a second balance weight 26. The first balance weight 25, which is semicircular, is formed integrally with the first balance shaft 21 so that its center of gravity is eccentric to the axis L of the first balance shaft 21. The second balance the second balance shaft 22 so that its center of gravity is eccentric to the axis L of the second balance shaft 22. Thus, the balancer 15 rotates the first balance shaft 21 and the second balance shaft 22 in a state in which their centers of gravity are eccentric to the centers of rotation. This suppresses vertical vibration caused by secondary inertial force of the engine.

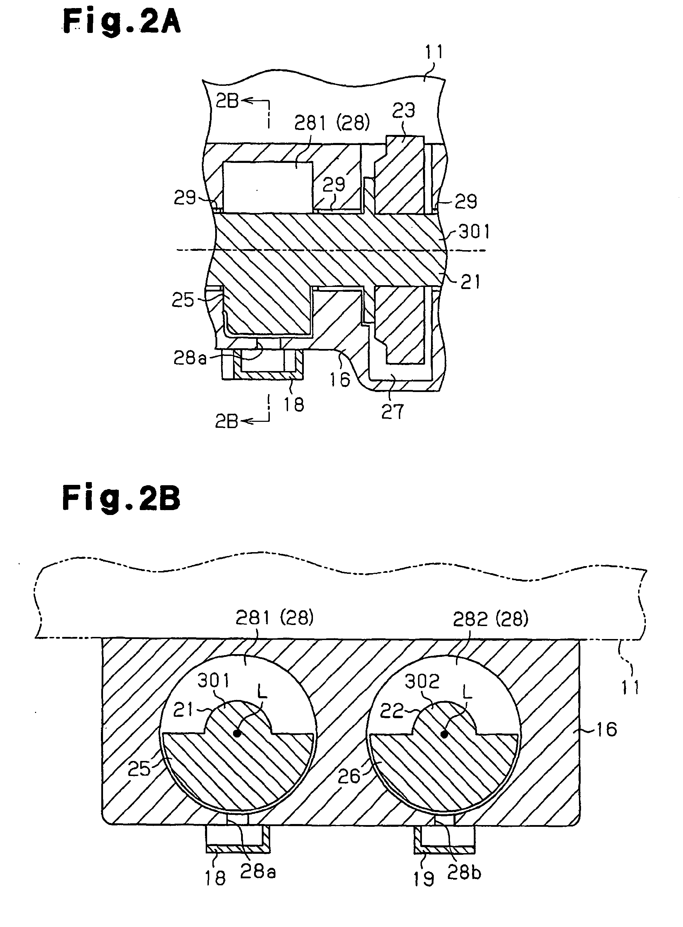

The balance housing 16 and the first balance shaft 21 will now be discussed with reference to Figs. 2A to 3. The second balance shaft 22 and the portion of the balance housing 16 related to the second balance shaft 22 will not be described since they are substantially the same as the first balance shaft 21 and the portion of the balance housing 16 related to the first balance shaft 21.

As shown in Fig. 2A, the balance housing 16 includes a gear compartment 27 and a first weight compartment 281. The gear compartment 27 accommodates the first gear 23, and the first weight compartment 281 accommodates the first balance weight 25. The gear compartment 27 and the first weight compartment 281 are partitioned by bearings 29, which rotatably support the first balance shaft 21. The first balance shaft 21 includes a first shaft portion 301 and a first balance weight 25. The first shaft portion 301 is rotatably supported by the bearings 29, which are cylindrical. The first gear 23 is fixed to the first shaft portion 301. Thus, the first gear 23 and first shaft portion 301 rotate integrally with each other. The first balance shaft 21 has a first end, which is defined at the side of the first balance weight 25 including the first gear 23, and an opposite second end. Fig. 2B shows a second weight compartment 282 and a second shaft portion 302, which are related with the second balance shaft 22. The structures of the second weight compartment 282 and second shaft portion 302 are similar to the first weight compartment 281 and the first shaft portion 301 and thus will not be described here. In the same manner as the first balance shaft 21, the second balance shaft 22 has a first end, which is defined at the side of the second balance weight 26 including the second gear 24, and an opposite second end.

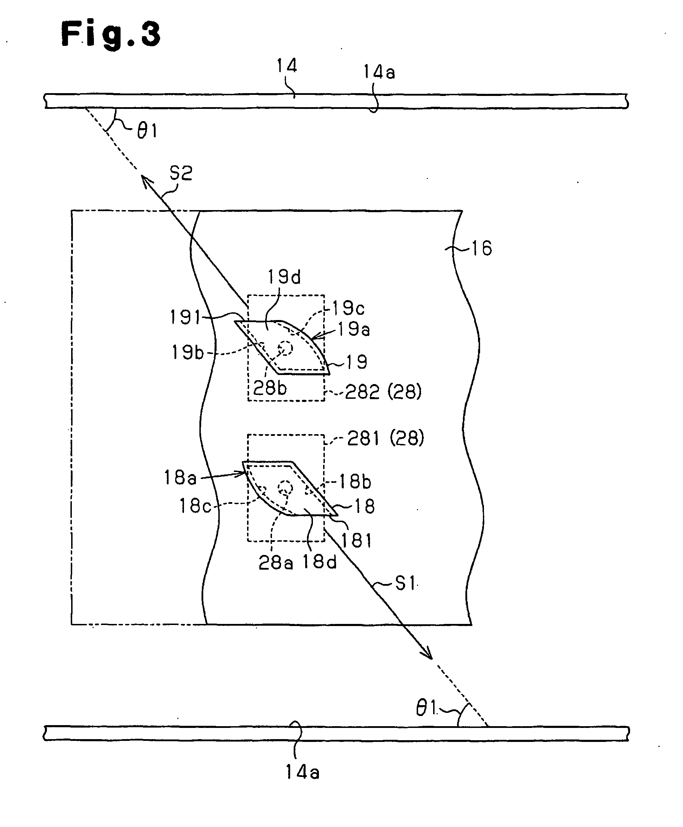

The first weight compartment 281 includes a lower portion in which a first discharge hole 28a is formed. The first discharge hole 28a is circular and used to discharge oil from the first weight compartment 281 and out of the balance housing 16. The first weight compartment 281 is in communication with the exterior of the balance housing 16 through the first discharge hole 28a. The balance housing 16 includes a lower end that includes a first discharge passage 18, which is flange-shaped and covers the first discharge hole 28a. Referring to Fig. 2B, the first discharge passage 18 extends downward from the lower end of the balance housing 16 and is then bent toward the wall surface 14a of the oil pan 14. Further, as shown in Fig. 3, the first discharge passage 18 includes a diagonal passage portion 18a, which changes the discharge direction of the oil passing through an outlet 181 of the first discharge passage 18 to be diagonal relative to the radial direction of the first balance shaft 21. More specifically, the discharge direction of the oil passing through the outlet 181 is changed to be diagonal relative to a direction extending along the axes L (hereinafter, referred to as the axial direction) of the balance shafts 21 and 22 from a direction orthogonal to the axial direction of the balance shafts 21 and 22. The diagonal passage portion 18a is formed so that the discharge direction of the oil passing through the outlet 181 of the first discharge passage 18 is inclined toward the first end of the first balance shaft 21. More specifically, the diagonal passage portion 18a is formed so that the oil passing through the outlet 181 is discharged in direction S1 (hereinafter referred to as the oil discharge direction S1), which is inclined by angle θ1 relative to the wall surface 14a of the oil pan 14.

The diagonal passage portion 18a includes a side wall 18b, a side wall 18c, and a bottom wall 18d. The side wall 18b is located inward relative to the oil discharge direction S1 (toward the first end of the first balance shaft 21). The side wall 18c is located at a position facing toward the side wall 18b in the axial direction of the balance shafts 21 and 22 and outward relative to the oil discharge direction S1 (toward the second end of the first balance shaft 21). The bottom wall 18d connects the side walls 18b and 18c. The diagonal passage portion 18a has a U-shaped cross-section. The first discharge passage 18 has an upper portion, which is closed by the lower wall surface of the balance housing 16 that includes the first discharge hole 28a. When viewed from beside, the bottom wall 18d extends horizontally in a direction orthogonal to the wall surface 14a of the oil pan 14. The side wall 18b extends in a direction parallel to the oil discharge direction S1. The side wall 18c is curved in an arcuate manner toward the first end of the first balance shaft 21 so as to be further inclined relative to the radial direction of the first balance shaft 21 as the outlet 181 of the first discharge passage 18 becomes closer.

The second weight compartment 282 includes a lower portion in which a second discharge hole 28b is formed. The second discharge hole 28b is circular and used to discharge oil from the second weight compartment 282 out of the balance housing 16. The second weight compartment 282 is in communication with the exterior of the balance housing 16 through the second discharge hole 28b. The balance housing 16 includes a lower end that includes a second discharge passage 19, which is flange-shaped and covers the second discharge hole 28a. As shown in Fig. 2B, the second discharge passage 18 extends downward from the lower end of the balance housing 16 and is then bent toward the wall surface 14a of the oil pan 14. Further, as shown in Fig. 3, the second discharge passage 19 includes a diagonal passage portion 19a, which changes the discharge direction of the oil passing through an outlet 191 of the second discharge passage 19 to be diagonal relative to the radial direction of the second balance shaft 22. More specifically, the discharge direction of the oil passing through the outlet 191 is changed to be diagonal relative to the axial direction of the balance shafts 21 and 22 from a direction orthogonal to the axial direction of the balance shafts 21 and 22. The diagonal passage portion 19a is formed so that the discharge direction of the oil passing through the outlet 191 of the second discharge passage 19 is inclined toward the second end of the second balance shaft 22. More specifically, the diagonal passage portion 19a is formed so that the oil passing through the outlet 191 is discharged in direction S2 (hereinafter referred to as the oil discharge direction S2), which is inclined by angle θ1 relative to the wall surface 14a of the oil pan 14.

The diagonal passage portion 19a includes a side wall 19b, a side wall 19c, and a bottom wall 19d. The side wall 19b is located inward relative to the oil discharge direction S2 (toward the second end of the second balance shaft 22). The side wall 19c is located at a position facing toward the side wall 19b in the axial direction of the balance shafts 21 and 22 and outward relative to the oil discharge direction S2 (toward the first end of the second balance shaft 22). The bottom wall 19d connects the side walls 19b and 19c. The diagonal passage portion 19a has a U-shaped cross-section. The second discharge passage 19 has an upper portion, which is closed by the lower wall surface of the balance housing 16 that includes the second discharge hole 28b. When viewed from beside, the bottom wall 19d extends horizontally in a direction orthogonal to the wall surface 14a of the oil pan 14. The side wall 19b extends in a direction parallel to the oil discharge direction S2. The side wall 19c is curved in an arcuate manner toward the second end of the second balance shaft 22 so as to be further inclined relative to the radial direction of the second balance shaft 22 as the outlet 191 of the second discharge passage 19 becomes closer.

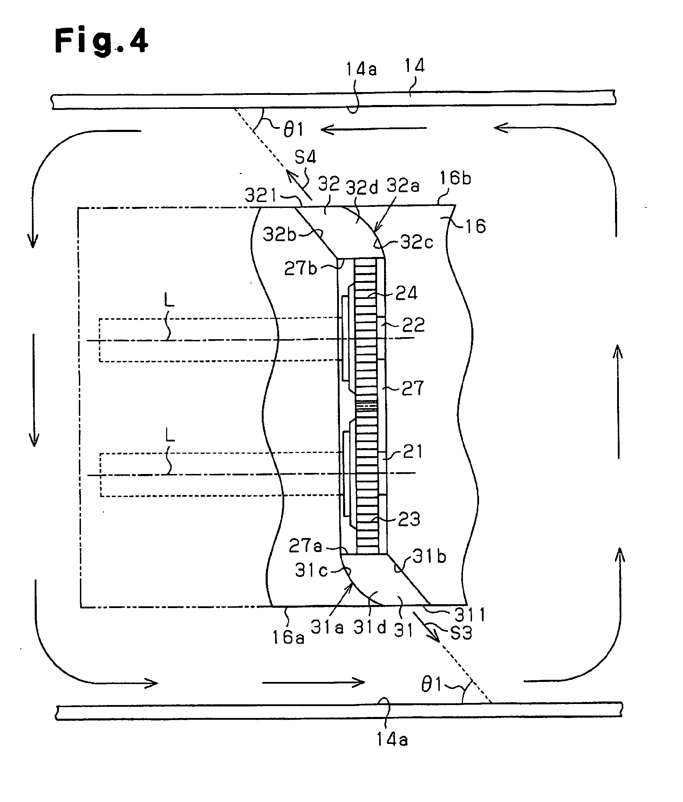

Referring to Fig. 4, the balance housing 16 includes a first discharge passage 31 and a second discharge passage 32, which discharge oil out of the balance housing 16. The first discharge passage 31 and the second discharge passage 32 are respectively formed at locations corresponding to the balance shafts 21 and 22 in the radial direction of the first and second balance shafts 21 and 22. The first discharge passage 31 extends from a side surface 27a of the portion in the gear compartment 27 accommodating the first gear 23 toward the outer surface 16a of the balance housing 16. The second discharge passage 32 extends from a side surface 27b of the portion of the gear compartment 27 accommodating the second gear 24 toward the outer surface 16b of the balance housing 16. Accordingly, the first discharge passage 31 and the second discharge passage 32 are in communication with the gear compartment 27.

The first discharge passage 31 includes a first diagonal passage portion 31a, which changes the discharge direction of the oil passing through an outlet 311 of the first discharge passage 31 to be diagonal relative to the radial direction of the first balance shaft 21. More specifically, the discharge direction of the oil passing through the outlet 311 is changed to be diagonal relative to the axial direction of the balance shafts 21 and 22 from a direction orthogonal to the axial direction of the balance shafts 21 and 22. The diagonal passage portion 31a is formed so that the discharge direction of the oil passing through the outlet 311 of the first discharge passage 31 is inclined toward the first end of the first balance shaft 21. More specifically, the diagonal passage portion 31a is formed so that the oil passing through the outlet 311 is discharged in direction S3 (hereinafter referred to as the oil discharge direction S3), which is inclined by angle θ1 relative to the wall surface 14a of the oil pan 14.

The diagonal passage portion 31a includes a side wall 31b, a side wall 31c, and a bottom wall 31d. The side wall 31b is located inward relative to the oil discharge direction S3 (toward the first end of the first balance shaft 21). The side wall 31c is located at a position facing toward the side wall 31b in the axial direction of the balance shaft 21 and outward relative to the oil discharge direction S3 (toward the second end of the first balance shaft 21). The bottom wall 31d connects the side walls 31b and 31c. The diagonal passage portion 31a has a U-shaped cross-section. The first discharge passage 31 has an upper portion, which is closed by the lower wall surface of the cylinder block 11. When viewed from beside, the bottom wall 31d extends horizontally in a direction orthogonal to the wall surface 14a of the oil pan 14. The side wall 31b extends in a direction parallel to the oil discharge direction S3. The side wall 31c is curved in an arcuate manner toward the first end of the first balance shaft 21 so as to be further inclined relative to the radial direction of the first balance shaft 21 as the outlet 311 of the first discharge passage 31 becomes closer. Further, the outlet 311 of the first discharge passage 31 has a width in the axial direction of the balance shafts 21 and 22 that is the same as the width of the side surface 27a of the gear compartment 27 in the axial direction of the balance shafts 21 and 22.

The second discharge passage 32 includes a second diagonal passage portion 32a, which changes the discharge direction of the oil passing through the outlet 321 of the second discharge passage 32 to be diagonal relative to the radial direction of the second balance shaft 22. More specifically, the discharge direction of the oil passing through the outlet 321 is set to be diagonal relative to the axial direction of the balance shafts 21 and 22 from a direction orthogonal to the axial direction of the balance shafts 21 and 22. The diagonal passage portion 32a is formed so that the discharge direction of the oil passing through the outlet 321 of the second discharge passage 32 is inclined toward the second end of the second balance shaft 22. More specifically, the diagonal passage portion 32a is formed so that the oil passing through the outlet 321 is discharged in direction S4 (hereinafter referred to as the oil discharge direction S4), which is inclined by angle θ1 relative to the wall surface 14a of the oil pan 14.

The diagonal passage portion 32a includes a side wall 32b, a side wall 32c, and a bottom wall 32d. The side wall 32b is located inward relative to the oil discharge direction S4 (toward the second end of the second balance shaft 22). The side wall 32c is located at a position facing toward the side wall 32b in the axial direction of the second balance shaft 22 and outward relative to the oil discharge direction S4 (toward the first end of the second balance shaft 22). The bottom wall 32d connects the side walls 32b and 32c. The diagonal passage portion 32a has a U-shaped cross-section. The second discharge passage 32 has an upper portion, which is closed by the lower wall surface of the cylinder block 11. When viewed from beside, the bottom wall 32d extends horizontally in a direction orthogonal to the wall surface 14a of the oil pan 14. The side wall 32b extends in a direction parallel to the oil discharge direction S4. The side wall 32c is curved in an arcuate manner toward the second end of the second balance shaft 22 so as to be further inclined relative to the radial direction of the second balance shaft 21 as the outlet 321 of the second discharge passage 32 becomes closer. Further, the outlet 321 of the second discharge passage 32 has a width in the axial direction of the balance shafts 21 and 22 that is the same as the width of the side surface 27b of the gear compartment 27 in the axial direction of the balance shafts 21 and 22.

The flow of oil will now be discussed. The oil supplied into the balance housing 16 lubricates the balance shafts 21 and 22 and the bearings 29. Then, the oil enters the gear compartment 27 and the weight compartments 281 and 282. Due to the rotations of the balance weights 25 and 26, the oil entering the weight compartments 281 and 282 collect on the wall surfaces in the weight compartments 281 and 282 and move toward the discharge holes 28a and 28b. The oil then enters the discharge passages 18 and 19 through the discharge holes 28a and 28b and is discharged in directions S1 and S2, which are inclined by angle θ1 relative to the wall surface 14a of the oil pan, as shown in Fig. 3. The oil discharged out of the balance housing 16 from the first discharge passage 18 and the second discharge passage 19 circulates and swirls along the wall surface 14a of the oil pan 14 in the same direction as it quietly falls into the oil contained in the oil pan 14.

Centrifugal force of the gears 23 and 24 is applied to the oil that enters the gear compartment 27. This forces the oil toward the discharge passages 31 and 32. Referring to Fig. 4, the oil then passes through the discharge passages 31 and 32 and is discharged out of the outlets 311 and 321 in directions S3 and S4, which are inclined by angle θ1 relative to the wall surface 14a of the oil pan 14. The oil discharged out of the balance housing 16 from the first discharge passage 31 and second discharge passage 32 circulates and swirls along the wall surface 14a of the oil pan 14 in the same direction (counterclockwise direction as shown by the arrows in Fig. 4) as it quietly falls into the oil contained in the oil pan 14. Accordingly, the oil discharged out of the balance housing 16 from the weight compartments 281 and 282 moves in the same direction as the oil discharged out of the balance housing 16 from the gear compartment 27

The first embodiment has the advantages described below.
(1) The discharge passages 31 and 32 include the diagonal passage portions 31a and 32a, which changes the discharge direction of the oil passing through the outlets 311 and 312 of the discharge passages 31 and 32 to be diagonal relative to the radial directions of the balance shafts 21 and 22. Thus, when the oil in the balance housing 16 is discharged out of the balance housing 16 through the discharge passages 31 and 32, the oil does not directly strike the wall surface 14a of the oil pan 14 head-on. Since oil does not directly strike the wall surface 14a head-on, oil discharged from the balance housing 16 is prevented from being scattered, and scattered oil does not fall directly into the oil contained in the oil pan 14. Consequently, even when oil is discharged out of the balance housing 16 from the discharge passages 31 and 32, changes in the surface level of the oil contained in the oil pan 14 are suppressed.
(2) The oil pan 14 is hollow and has sufficient space for accommodating the balancer 15. Thus, the oil pan 14 is optimal for accommodating the balancer 15.
(3) The discharge passages 31 and 32 are each in communication with the gear compartment 27. Thus, the centrifugal force produced when the gears 23 and 24 rotate in the gear compartment 27 may be used to discharge oil out of the balance housing 16.
(4) The side wall 31c of the diagonal passage portion 31a is curved in an arcuate manner toward the first end of the first balance shaft 21 so as to be further inclined relative to the radial direction of the first balance shaft 21 as the outlet 311 of the first discharge passage 31 becomes closer. Further, the side wall 32c of the diagonal passage portion 32a is curved in an arcuate manner toward the second end of the second balance shaft 22 so as to be further inclined relative to the radial direction of the second balance shaft 22 as the outlet 321 of the second discharge passage 32 becomes closer. Thus, the oil in the discharge passages 31 and 32 flows through the diagonal passage portions 31a and 32a without any resistance. This easily discharges the oil out of the balance housing 16.
(5) The first and second discharge passage 31 and 32 are formed at positions corresponding to the balance shafts 21 and 22 in the radial directions of the first and second balance shafts 21 and 22, respectively. The discharge direction S3 of the oil passing through the outlet 311 of the first discharge passage 31 is inclined toward the first end of the first balance shaft 21. The discharge direction S4 of the oil passing through the outlet 321 of the second discharge passage 32 is inclined toward the second end of the second balance shaft 21. Thus, the oil discharged from the first and second discharge passages 31 of the balance housing 16 circulate in the same direction along the wall surface 14a of the oil pan 14. That is, the oil is circulated with less resistance compared to when the oil discharged from the first discharge passage 31 and the oil discharged from the second discharge passage 32 circulate in opposite directions along the wall surface 14a of the oil pan 14. As a result, the oil discharged out of the balance housing 16 moves along the wall surface 14a of the oil pan 14 as it quietly falls into the oil contained in the oil pan 14.
(6) The flange-shaped discharge passages 18 and 19 are arranged so as to cover the discharge holes 28a and 28 in the lower end of the balance housing 16. The first discharge passage 18 and the second discharge passage 19, which are in communication with the discharge holes 28a and 28b, extend downward and are bent toward the wall surface 14a of the oil pan 14. Further, the first and second discharge passages 18 and 19 include the diagonal passage portions 18a and 19a, which change the discharge directions S1 and S2 of the oil passing through outlets 181 and 191 of the discharge passages 18 and 19 to be diagonal relative to the radial directions of the balance shafts 21 and 22, respectively. Thus, when the oil in the weight compartments 281 and 282 is discharged out of the balance housing 16 through the discharge passages 18 and 19, the oil does not directly strike the wall surface 14a of the oil pan 14 head-on. Since oil does not directly strike the wall surface 14a head-on, oil discharged from the balance housing 16 is prevented from being scattered, and scattered oil does not fall directly into the oil contained in the oil pan 14. Consequently, even when oil is discharged out of the balance housing 16 from the discharge passages 18 and 19, changes in the surface level of the oil contained in the oil pan 14 are suppressed.

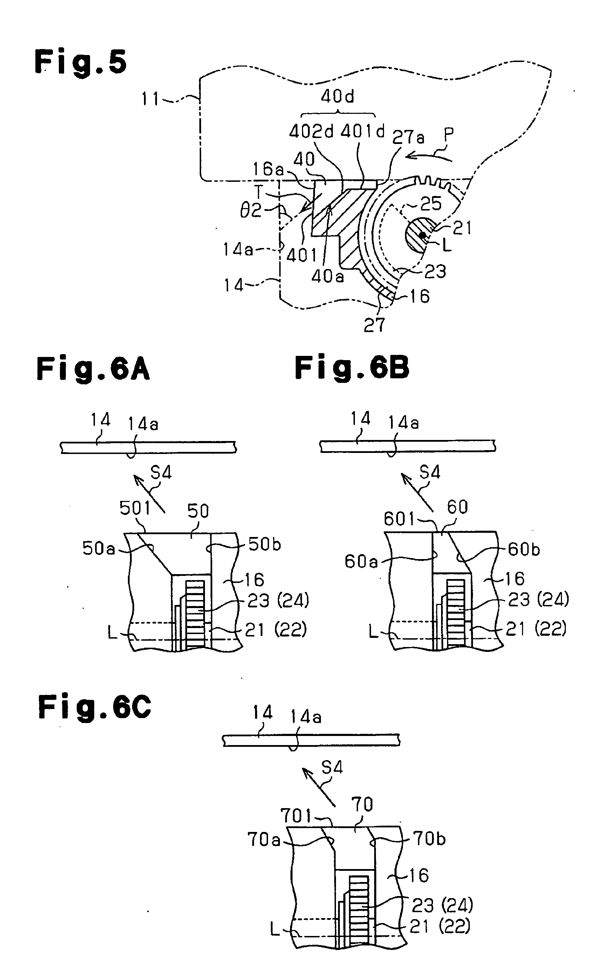

A balancer outside the scope of the present invention will now be discussed with reference to Fig. 5. To avoid redundancy, like or same reference characters are given to those components that are the same as the corresponding components of the first embodiment illustrated in Figs. 1 to 4. Such components will not be described.

As shown in Fig. 5, the balance housing 16 includes a discharge passage 40 for discharging oil out of the balance housing 16. The discharge passage 40 is located at a position corresponding to the first balance shaft 21 in the radial direction of the first balance shaft 21. The discharge passage 40 extends from the side surface 27a of the portion of the gear compartment 27 accommodating the first gear 23 toward the outer surface 16a of the balance housing 16. Thus, the discharge passage 40 is in communication with the gear compartment 27.

The discharge passage 40 includes a diagonal passage portion 40a, which changes the discharge direction of the oil passing through an outlet 401 of the discharge passage 40 to be diagonal relative to the radial direction of the first balance shaft 21. The diagonal passage portion 40a is formed so that the oil passing through the outlet 401 of the discharge passage 40 is discharged in direction T (hereinafter referred to as the oil discharge direction T), which is inclined by angle θ2 relative to the wall surface 14a of the oil pan 14.

The diagonal passage portion 40a includes two side walls (not shown) and a bottom wall 40d connecting the two side walls. The diagonal passage portion 40a has a U-shaped cross-section. The discharge passage 40 has an upper portion, which is closed by the lower wall surface of the cylinder block 11. The two side walls extend parallel to each other in a direction orthogonal to the axial direction of the balance shafts 21 and 22. The bottom wall 40d includes a leveled section 401d and a sloped section 402d. When viewed from beside, the leveled section 401d extends horizontally in a direction orthogonal to the wall surface 14a of the oil pan 14 from the side surface 27a of the gear compartment 27, and the sloped section 402d extends in a direction parallel to the oil discharge direction T so as to descend toward the outlet 401 of the discharge passage 40.

The oil to which force is applied by the first gear 23 descends along the bottom wall 40d of the discharge passage 40 and passes through the outlet 401 of the discharge passage 40. The oil is discharged in direction T, which is inclined by angle θ2 relative to the wall surface 14a of the oil pan 14. The oil discharged out of the balance housing 16 moves along the wall surface 14a and quietly falls into the oil contained in the oil pan 14. In this embodiment, a discharge passage 40 is also located at a position corresponding to the second balance shaft 22 in the radial direction of the second balance shaft 22. However, the structure of this discharge passage 40 is similar to that described above and thus will not be described.

In addition to advantage (6) of the first embodiment, the balancer of fig.5 has the advantage described below.
(7) The discharge passage 40 includes the diagonal passage portion 40a, which changes the discharge direction of the oil passing through the outlet 401 of the discharge passage 40 to be diagonal relative to the radial direction of the first balance shaft 21. Further, the bottom wall 40d of the diagonal passage portion 40a includes the leveled section 401d, which is leveled and extends in a direction orthogonal to the wall surface 14a of the oil pan 14 from the side surface 27a of the gear compartment 27, and the sloped section 402d, which extends in a direction parallel to the oil discharge direction T so as to descend toward the outlet 401 of the discharge passage 40. Thus, the oil passing through the discharge passage 40 is easily discharged out of the balance housing 16.

The above embodiments may be modified as described below.

In the first embodiment, the direction in which the side walls 31b and 32b and the side walls 31c and 32c extend may be changed as required. For example, a discharge passage 50 may include side walls 50a and 50b as shown in Fig. 6A. The side wall 50a is located inward relative to the oil discharge direction S4 (the side at which the second end of the first balance shaft 21 or second balance shaft 22 is arranged). The side wall 50b is located at a position facing toward the side wall 50a in the axial direction of the balance shafts 21 and 22 and outward relative to the oil discharge direction S4 (the side at which the first end of the first balance shaft 21 or second balance shaft 22 is arranged). The side wall 50b extends in a direction orthogonal to the axial direction of the balance shafts 21 and 22. The side wall 50a extends parallel to the oil discharge direction S4. That is, the discharge passage 50 is formed so that it widens as an outlet 501 of the discharge passage 50 becomes closer.

Further, a discharge passage 60 may include side walls 60a and 60b as shown in Fig. 6B. The side wall 60a is located inward relative to the oil discharge direction S4 (the side at which the second end of the first balance shaft 21 or second balance shaft 22 is arranged). The side wall 60b is located at a position facing toward the side wall 60a in the axial direction of the balance shafts 21 and 22 and outward relative to the oil discharge direction S4 (the side at which the first end of the first balance shaft 21 or second balance shaft 22 is arranged). The side wall 60b extends parallel to the oil discharge direction S4. The side wall 60a extends in a direction orthogonal to the axial direction of the balance shafts 21 and 22. That is, the discharge passage 60 is formed so that it narrows as an outlet 601 of the discharge passage 60 becomes closer.

Additionally, a discharge passage 70 may include side walls 70a and 70b as shown in Fig. 6C. The side wall 70a is located inward relative to the oil discharge direction S4 (the side at which the second end of the first balance shaft 21 or second balance shaft 22 is arranged). The side wall 70b is located at a position facing toward the side wall 70a in the axial direction of the balance shafts 21 and 22 and outward relative to the oil discharge direction S4 (the side at which the first end of the first balance shaft 21 or second balance shaft 22 is arranged). The side wall 70b includes a section that extends orthogonal to the axial direction of the balance shafts 21 and 22 and a section that extends parallel to the oil discharge direction S4 toward an outlet 701 of the discharge passage 70. In the same manner, the side wall 70a includes a section that extends orthogonal to the axial direction of the balance shafts 21 and 22 and a section that extends parallel to the oil discharge direction S4 toward the outlet 701 of the discharge passage 70.

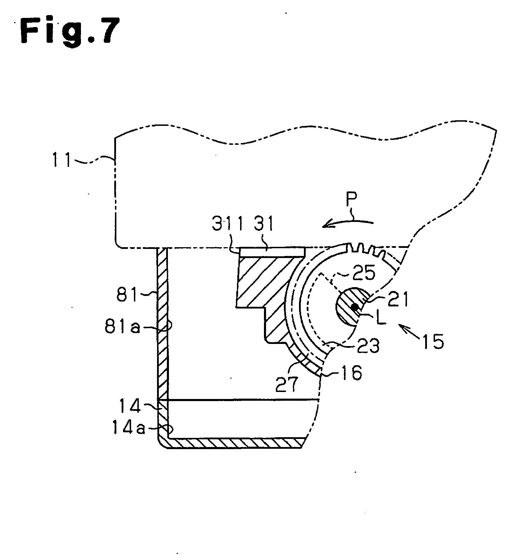

In each of the above-described embodiments, the balancer 15 does not have to be arranged in the oil pan 14. For example, as shown in Fig. 7, a frame 81 for accommodating the balancer 15 may be arranged around the balancer 15, which is fixed to the lower end of the cylinder block 11. The frame 81 is attached to the lower side of the cylinder block 11 so as to surround the balancer 15. The oil pan 14 is attached to the lower side of the frame 81. The lower end of the balancer 15 is located above the portion at which frame 81 and oil pan 14 are attached together. The balancer 15 includes a discharge passage 31 for discharging oil. In such a structure, if the discharge passage 31 were to be formed so as to extend in a direction orthogonal to the wall surface 81a of the frame 81, the oil discharged from discharge passage 31 would directly strike the wall surface 81a of the frame 81 head-on. Further, the oil directly striking the wall surface 81a of the frame 81 head-on would scatter and directly fall into the oil contained in the oil pan 14. This would increase changes in the surface level of the oil contained in the oil pan 14. However, the arrangement of the discharge passages 31 and 32 in the balancer 15 in the same manner as the embodiment described above would apply centrifugal force of the gears 23 and 24 to the oil entering the gear compartment 27 and force the oil toward the discharge passages 31 and 32. The oil forced out by the gears 23 and 24 passes through the discharge passages 31 and 32. Then, the oil is discharged through the outlets 311 and 321 in directions S3 and S4, which are inclined by angle θ1 relative to the wall surface 81a of the frame 81, in the same manner as the embodiment described above. The oil discharged out of the balance housing 16 from the first discharge passage 31 and the second discharge passage 32 circulates and swirls along the wall surface 14a of the oil pan 14 and the wall surface 81a of the frame 81 in the same direction as it quietly falls along the wall surface 81a and wall surface 14a into the oil contained in the oil pan 14.

In the first embodiment, the discharge passages 18 and 19 may be eliminated, and the balance housing 16 may be provided with only the discharge passages 31 and 32.

In the first embodiment, the diagonal passage portions 18a and 19a may be eliminated from the flange-shaped discharge passages 18 and 19, which cover the discharge holes 28a and 28b at the lower end of the balance housing 16. In this case, the discharge passages 18 and 19 only extend in a direction orthogonal to the axial direction of the balance shafts 21 and 22.

In the first embodiment, the side wall 31b may be curved to be arcuate in the same manner as the side wall 31c. Further, the side wall 32b may be curved to be arcuate in the same manner as the side wall 32c.

In the first embodiment, the bottom walls 18d, 19d, 31d, and 32d of the discharge passages 18, 19, 31, and 32 may be formed to descend toward the outlets 181, 191, 311, and 321 of the discharge passages 18, 19, 31, and 32, respectively. It is preferable that the bottom walls 18d, 19d, 31d, and 32d be formed to be horizontal or inclined in a descending manner. The bottom walls 18d, 19d, 31d, and 32d should not be formed in an ascending manner.

In the first embodiment, the second diagonal passage portion 32a may be formed so that the discharge direction of the oil passing through the outlet 321 of the second discharge passage 32 is inclined toward the first end of the second balance shaft 22.

In each of the above-described embodiments, the discharge passages 18, 19, 31, and 32 do not have to have a U-shaped cross-section and may have, for example, a circular, elongated, elliptic, or rectangular cross-section.

In each of the above-described embodiments, the discharge passages 31 and 32 may be hole-like passages formed by boring the balance housing 16 with a drill or the like.

In each of the above-described embodiments, the oil discharge directions S1 to S4 and T are inclined by angles θ1 and θ2 relative to the wall surface 14a of the oil pan 14. However, the angle of the oil discharge direction relative to the oil pan 14 may be changed in accordance with the arrangement of the balance housing 16 and the oil pan 14.

In each of the above-described embodiments, instead of implementing a gear-drive technique to transmit torque from the crankshaft 12 to the first balance shaft 21 and second balance shaft 22, a chain-drive technique or belt-drive technique may be implemented.

In each of the above-described embodiments, the first balance weight 25 and the second balance weight 26 may be discrete from the first balance shaft 21 and the second balance shaft 22. In this case, the first balance weight 25 and the second balance weight 26 may be fastened to the first balance shaft 21 and the second balance shaft 22 by bolts or the like so as to be integrally rotatable with the balance shafts 21 and 22.

In each of the above embodiments, the balance weights 25 and 26 are respectively formed integrally with the balance shafts 21 and 22 in the balancer 15. However, two or more balance weights may be formed integrally with the balance shafts 21 and 22.

## Claims

1. A combination of an engine balancer and an oil pan (14) or frame (18), the engine balancer including a balance housing (16), attachable to a lower portion of a cylinder block (11), the engine balancer arranged in said oil pan (14) or frame (18), and two balance shafts (21, 22) housed in the balance housing (16) and adapted to receive torque from a crankshaft (12), wherein
the balance housing (16) includes a discharge passage (18, 19, 31, 32, 50, 60, 70) for discharging oil out of the balance housing (16); and
**characterized in that**
the discharge passage (18, 19, 31, 32, 50, 60, 70) includes a diagonal passage portion (18a, 19a, 31a, 32a, 50a, 60a, 70a) which sets the discharge direction (S1, S2, S3, S4) of the oil passing through an outlet (181, 191, 311, 321, 501, 601, 701) of the discharge passage (18, 19, 31, 32, 50, 60, 70) to be inclined toward ends of the balance shafts (21, 22) relative to a plane orthogonal to the axial direction of the balance shafts (21, 22), so that discharged oil does not directly strike a wall surface (14a) of the oil pan (14) or frame (18) head-on.

2. The combination according to claim 1, wherein the balancer is arranged in the oil pan (14).

3. The combination according to claim 1 or 2, wherein:
the balance housing (16) includes a gear compartment (27) for accommodating a gear (23, 24) which transmits torque from the crankshaft (12) to the balance shafts (21, 22); and
the discharge passage (31, 32, 50, 60, 70) is in communication with the gear compartment (27).

4. The combination according to any one of claims 1 to 3, wherein the diagonal passage portion (18a, 19a, 31a, 32a, 50a, 60a, 70a) includes a side wall (18c, 19c, 31c, 32c) curved to be arcuate.

5. The combination according to any one of claims 1 to 4, wherein the diagonal passage portion (18a, 19a, 31a, 32a, 50a, 60a, 70a) includes a descending bottom wall.

6. The combination according to any one of claims 1 to 5, wherein:
the discharge passage (18, 19, 31, 32, 50, 60, 70) is one of a first discharge passage (18, 31) and a second discharge passage (19, 32) located at a position corresponding to the two balance shafts (21, 22) in the radial direction of the balance shafts (21, 22);
the discharge direction (S1, S3) of the oil passing through an outlet (181, 311) of the first discharge passage (18, 31) is diagonal relative to the radial direction of the balance shafts (21, 22) and extends toward one direction along the axes (L) of the balance shafts (21, 22); and
the discharge direction (S2, S4) of the oil passing through an outlet (191, 321) of the second discharge passage (19, 32) is diagonal relative to the radial direction of the balance shafts (21, 22) and extends toward another direction along the axes (L) of the balance shafts (21, 22).

## Patentansprüche

1. Kombination aus einem Motorausgleichsmodul und einer Ölwanne (14) oder einem Rahmen (18), wobei das Motorausgleichsmodul ein an einem unteren Abschnitt eines Zylinderblocks (11) anbringbares Ausgleichsgehäuse (16), das in der Ölwanne (14) oder an dem Rahmen (18) angeordnete Motorausgleichsmodul und zwei Ausgleichswellen (21, 22) enthält, die in dem Ausgleichsgehäuse (16) untergebracht sind und Drehmoment von einer Kurbelwelle (12) aufnehmen, wobei
das Ausgleichsgehäuse (16) einen Auslassdurchgang (18, 19, 31, 32, 50, 60, 70) zum Auslassen von Öl aus dem Ausgleichsgehäuse (16) umfasst; und
**dadurch gekennzeichnet, dass**
der Auslassdurchgang (18, 19, 31, 32, 50, 60, 70) einen diagonalen Durchgangsabschnitt umfasst (18a, 19a, 31a, 32a, 50a, 60a, 70a), der die Auslassrichtung (S1, S2, S3, S4) des durch einen Auslass (181, 191, 311, 321, 501, 601, 701) des Auslassdurchgangs (18, 19, 31, 32, 50, 60, 70) laufenden Öls festsetzt, dass sie in Richtung der Enden der Ausgleichswellen (21, 22) relativ zu einer zu der axialen Richtung der Ausgleichswellen (21, 22) orthogonalen Ebene geneigt ist, so dass ausgelassenes Öl nicht direkt frontal auf eine Wandfläche (14a) der Ölwanne (14) oder den Rahmen (18) trifft.

2. Kombination nach Anspruch 1, wobei das Ausgleichsmodul in der Ölwanne (14) angeordnet ist.

3. Kombination nach Anspruch 1 oder 2, wobei:
das Ausgleichsgehäuse (16) einen Zahnradraum (27) zum Unterbringen eines Zahnrads (23, 24) enthält, das Drehmoment von der Kurbelwelle (12) zu den Ausgleichswellen (21, 22) überträgt; und
der Auslassdurchgang (31, 32, 50, 60, 70) mit dem Zahnradraum (27) verbunden ist.

4. Kombination nach einem der Ansprüche 1 bis 3, wobei der diagonale Durchgangsabschnitt (18a, 19a, 31a, 32a, 50a, 60a, 70a) eine bogenförmig gekrümmte Seitenwand (18c, 19c, 31c, 32c) umfasst.

5. Kombination nach einem der Ansprüche 1 bis 4, wobei der diagonale Durchgangsabschnitt (18a, 19a, 31a, 32a, 50a, 60a, 70a) eine abfallende untere Wand (18c, 19c, 31c, 32c) umfasst.

6. Kombination nach einem der Ansprüche 1 bis 5, wobei:
der Auslassdurchgang (18, 19, 31, 32, 50, 60, 70) einer von einem ersten Auslassdurchgang (18, 31) und einem zweiten Auslassdurchgang (19, 32) ist, die an einer mit den beiden Ausgleichswellen (21, 22) übereinstimmenden Stelle und in der Radialrichtung der Ausgleichswellen (21, 22) angeordnet sind;
die Auslassrichtung (S1, S3) des durch einen Auslass (181, 311) des ersten Auslassdurchgangs (18, 31) laufenden Öls relativ zu der radialen Richtung des Ausgleichswellen (21, 22) diagonal ist und sich in einer Richtung entlang den Achsen (L) der Ausgleichswellen (21, 22) erstreckt; und
die Auslassrichtung (S2, S4) des durch einen Auslass (191, 321) des zweiten Auslassdurchgangs (19, 32) laufenden Öls relativ zu der radialen Richtung der Ausgleichswellen (21, 22) diagonal ist und sich in einer anderen Richtung entlang den Achsen (L) der Ausgleichswellen (21, 22) erstreckt.

## Revendications

1. Combinaison d'un balancier moteur et d'un carter d'huile (14) ou cadre (18), le balancier moteur comportant un boîtier de balancier (16) pouvant être fixé à une partie inférieure d'un bloc-cylindres (11), le balancier moteur agencé dans ledit carter d'huile (14) ou cadre (18), et deux arbres de balancier (21, 22) logés dans le boîtier de balancier (16) et conçus pour recevoir un couple d'un vilebrequin (12), où
le boîtier de balancier (16) comporte un passage de décharge (18, 19, 31, 32, 50, 60, 70) pour décharger l'huile du boîtier de balancier (16) ; et
**caractérisée en ce que**
le passage de décharge (18, 19, 31, 32, 50, 60, 70) comporte une partie de passage diagonal (18a, 19a, 31a, 32a, 50a, 60a, 70a) qui définit la direction de décharge (S1, S2, S3, S4) de l'huile passant par une sortie (181, 191, 311, 321, 501, 501, 601, 701) du passage de décharge (18, 19, 31, 32, 50, 60, 70) à incliner vers des extrémités des +
arbres de balancier (21, 22) par rapport à un plan orthogonal à la direction axiale des arbres de balancier (21, 22), de sorte que l'huile déchargée ne percute pas directement de front une surface de paroi (14a) du carter d'huile (14) ou cadre (18).

2. Combinaison selon la revendication 1, dans laquelle le balancier est agencé dans le carter d'huile (14).

3. Combinaison selon la revendication 1 ou 2, dans laquelle :
le boîtier de balancier (16) comporte un compartiment d'engrenages (27) pour accueillir un engrenage (23, 24) qui transmet un couple du vilebrequin (12) jusqu'aux arbres de balancier (21, 22) ; et
le passage de décharge (31, 32, 50, 60, 70) est en communication avec le compartiment d'engrenages (27).

4. Combinaison selon l'une quelconque des revendications 1 à 3, dans laquelle la partie de passage diagonal (18a, 19a, 31a, 32a, 50a, 60a, 70a) comporte une paroi latérale (18c, 19c, 31c, 32c) incurvée en arc.

5. Combinaison selon l'une quelconque des revendications 1 à 4, dans laquelle la partie de passage diagonal (18a, 19a, 31a, 32a, 50a, 60a, 70a) comporte une paroi inférieure descendante.

6. Combinaison selon l'une quelconque des revendications 1 à 5, dans laquelle :
le passage de décharge (18, 19, 31, 32, 50, 60, 70) est l'un d'un premier passage de décharge (18, 31) et d'un deuxième passage de décharge (19, 32) situé à une position correspondant aux deux arbres de balancier (21, 22) dans la direction radiale des arbres de balancier (21, 22) ;
la direction de décharge (S1, S3) de l'huile passant par une sortie (181, 311) du premier passage de décharge (18, 31) est diagonale par rapport à la direction radiale des arbres de balancier (21, 22) et s'étend vers une direction le long des axes (L) des arbres de balancier (21, 22) ; et
la direction de décharge (S2, S4) de l'huile passant par une sortie (191, 321) du deuxième passage de décharge (19, 32) est diagonale par rapport à la direction radiale des arbres de balancier (21, 22) et s'étend vers une autre direction le long des axes (L) des arbres du balancier (21, 22).
